# EUROPÄISCHE PATENTSCHRIFT

(11) **EP 0 627 563 B1**
(45) Veröffentlichungstag und Bekanntmachung des Hinweises auf die Patenterteilung: **19.02.1997**
(21) Anmeldenummer: 94201492.9
(22) Anmeldetag: 26.05.1994
(51) Int. Cl.: F16B 5/02, B23P 15/00

(54) **Blech mit einem Schraubenkanal**
Metal sheet with a threaded channel
Tôle avec une cannelure taraudée

(30) Priorität: 03.06.1993 DE 4318421
(43) Veröffentlichungstag der Anmeldung: 07.12.1994
(73) Patentinhaber: Philips Patentverwaltung GmbH, 22335 Hamburg (DE); PHILIPS ELECTRONICS N.V., 5621 BA Eindhoven (NL)
(72) Erfinder: Weidner, Hans-Jürgen, D-20097 Hamburg (DE); Scheuermann, Franz, D-20097 Hamburg (DE); Kind, Karlheinz, D-20097 Hamburg (DE)
(74) Vertreter: Erdmann, Anton, Dipl.-Ing.

(56) Entgegenhaltungen:
- DE-C- 624 404
- US-A- 2 818 764

## Beschreibung

Die Erfindung bezieht sich auf ein Blech mit einem von einer Blechkante ausgehenden, parallel zu den Blechoberflächen verlaufenden Schraubenkanal. Die Erfindung bezieht sich ferner auf ein Verfahren zur Herstellung eines derartigen Schraubenkanales.

Durch die DE-C 624 404 ist ein Blech mit einem derartigen Schraubenkanal bekannt geworden. Hierbei handelt es sich um eine Anordnung zur Verschraubung eines Bleches mit einer senkrecht zu ihm stehenden Fläche, wobei das Blech nur mit einer der Blechdicke entsprechenden Hochkante auf der Fläche aufsteht. Dabei wird ein Schraubenkanal mit einem Muttergewinde in dem Blech dadurch geschaffen, daß das Blech mehrfach eingeschnitten ist und die zwischen den Einschnittstellen liegenden Blechstreifen derartig aus der Blechebene herausgebogen sind, daß sich ein aus halben Wandungen bestehender Kanal ergibt, in den Gewindehälften eingeschnitten sind. Die herausgebogenen Blechstreifen überragen dabei die jeweiligen Oberflächen das Bleches.

Der Erfindung liegt die Aufgabe zugrunde, ein Blech mit einem Schraubenkanal der eingangs genannten Art zu schaffen, ohne daß im Bereich des Schraubenkanales Teile des Bleches über die Oberflächen hinausragen.

Diese Aufgabe wird gemäß der Erfindung dadurch gelöst, daß der Schraubenkanal gebildet ist aus zwischen Aussparungen liegenden Blechteilen, die abwechselnd in Richtung der einen oder der anderen Blechoberfläche geprägt sind und deren Außenflächen mit den jeweiligen Blechoberflächen fluchten. Der auf diese Weise gebildete Schraubenkanal dient zur Aufnahme einer Gewindeschraube oder einer selbstformenden Schraube. Durch die Prägung werden die entsprechenden Blechteile verfestigt, wobei die Außenflächen der verfestigten Teile mit der jeweiligen Oberfläche des Bleches fluchten.

Ein einfaches Verfahren zur Herstellung eines Bleches der eingangs genannten Art mit einem Schraubenkanal ist dadurch gekennzeichnet,
a) daß das Blech, ausgehend von einer Blechkante, im Bereich des vorgesehenen Schraubenkanals derart mit Aussparungen versehen wird, daß zwischen den Aussparungen Blechteile stehen bleiben, und
b) daß die stehengebliebenen Blechteile abwechselnd in Richtung der einen oder der anderen Blechoberfläche so geprägt werden, daß deren Außenflächen mit der jeweiligen Blechoberfläche fluchten.

Diese Aussparungen sind jeweils gleich groß und in gleichem Abstand zueinander angeordnet. Sie können z.B. auf einfache Weise durch Stanzen hergestellt werden, wobei zwischen den gestanzten Aussparungen die genannten Blechteile stehen bleiben, die in einem zweiten Verfahrensschritt in Richtung der einen oder der anderen Blechoberfläche geprägt und damit verfestigt werden. Bei dem Prägevorgang drückt sich ein Teil des Materials in die Aussparungen.

Eine bevorzugte Ausführung des genannten Verfahrens besteht darin, daß die Aussparungen in Form von in einer Flucht liegenden Bohrungen angebracht werden, wobei die zwischen den Bohrungen stehenbleibenden Stege in einem zweiten Verfahrensschritt, wie oben dargelegt, geprägt und damit verfestigt werden.

In Ausgestaltung der Erfindung ist vorgesehen, daß die kreisförmigen Bohrungen derart angeordnet werden, daß der Mittelpunkt der ersten Bohrung auf der Kante des Bleches liegt. Dadurch kann erreicht werden, daß beim Prägen das Material des ersten Steges nicht über die Kante des Bleches hinaus ragt.

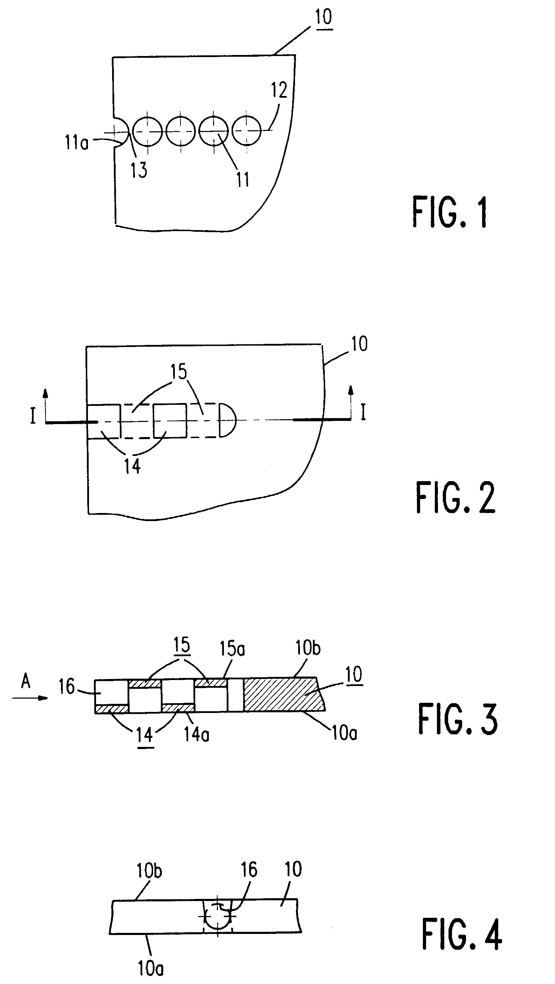

In der Zeichnung ist in den Fig. 1 bis 4 ein Ausführungsbeispiel des Gegenstandes gemäß der Erfindung schematisch dargestellt.
Fig. 1 zeigt den Ausschnitt eines Bleches mit kreisförmig angeordneten Bohrungen vor dem Prägen,
Fig. 2 zeigt das Blech nach dem Prägen,
Fig. 3 zeigt einen Schnitt I-I gemäß Fig. 2, und
Fig. 4 zeigt eine Ansicht in Richtung A gemäß Fig. 3.

Mit 10 ist ein Blech bezeichnet, das im Bereich eines zu fertigenden Schraubenkanals mit nebeneinander liegenden, durchgehenden Bohrungen 11 versehen ist. Die Bohrungen 11 liegen alle auf einer Geraden 12 und sind so angeordnet, daß der Mittelpunkt der ersten Bohrung auf der Kante liegt, so daß hier nur eine halbkreisförmige Bohrung 11a gebildet wird. Zwischen den Bohrungen sind Stege 13 stehen geblieben, die in einem nächsten Verfahrensschritt in Richtung der einen oder anderen Blechoberfläche 10a oder 10b geprägt werden. Beim Prägen wird das zwischen den Bohrungen 11 befindliche Material der Stege 13 verfestigt und wandert gleichzeitig teilweise in den durch die Bohrungen 11 entstandenen Raum aus. In Fig. 3 sind die in Richtung der Blechoberfläche 10a geprägten und verfestigten Teile des Bleches mit 14 und die in Richtung der Blechoberfläche 10b geprägten und verfestigten Teile des Bleches mit 15 bezeichnet. Die Außenflächen 14a, 15a der verfestigten Teilen 14, 15 fluchten mit der jeweiligen Blechoberfläche 10a, 10b. Zwischen den so gebildeten, verfestigten Teilen 14, 15 ist ein Schraubenkanal 16 gebildet, in den z.B. eine selbstformende Schraube eingedreht werden kann, die sich selbst ein Gewinde dreht. Es ist jedoch auch möglich, diesen Schraubenkanal 16 mit einem eigenen Gewinde für eine später einzudrehende Schraube zu versehen.

## Patentansprüche

1. Blech (10) mit einem von einer Blechkante ausgehenden, parallel zu den Blechoberflächen (10a, b) verlaufenden Schraubenkanal (16), dadurch gekennzeichnet, daß der Schraubenkanal (16) gebildet ist aus zwischen Aussparungen (11) liegenden Blechteilen (13), die abwechselnd in Richtung der einen oder der anderen Blechoberfläche (10a, b) geprägt sind und deren Außenflächen (14a, 15a) mit der jeweiligen Blechoberfläche (10a, 10b) fluchten.

2. Verfahren zur Herstellung eines Bleches (10) mit einem Schraubenkanal (16) nach Anspruch 1, dadurch gekennzeichnet,
a) daß das Blech (10), ausgehend von einer Kante, im Bereich des vorgesehenen Schraubenkanals (16) derart mit Aussparungen (11) versehen wird, daß zwischen den Aussparungen (11) Blechteile (13) stehen bleiben, und
b) daß die stehengebliebenen Blechteile (13) abwechselnd in Richtung der einen (10a) oder der anderen (10b) Blechoberfläche so geprägt werden, daß deren Außenflächen (14a, 15a) mit der jeweiligen Blechoberfläche (10a, 10b) fluchten.

3. Verfahren nach Anspruch 2, dadurch gekennzeichnet, daß die Aussparungen in Form von in einer Flucht (12) liegenden Bohrungen (11) angebracht werden, zwischen denen als Blechteile Stege (13) stehen bleiben.

4. Verfahren nach Anspruch 3, dadurch gekennzeichnet, daß die kreisförmigen Bohrungen (11) derart angeordnet werden, daß der Mittelpunkt der ersten Bohrung (11a) auf der Kante des Bleches (10) zu liegen kommt.

## Claims

1. A metal plate (10) with a screw bore (16) which enters one side face of the metal plate and runs parallel to the plate surfaces (10a, b), characterized in that the screw bore (16) is formed from metal portions (13) situated between recesses (11), which portions are stamped alternately in the direction of the one and the other plate surface (10a, b) and whose outer surfaces (14a, 15a) lie flush with the relevant metal plate surfaces (10a, 10b).

2. A method of manufacturing a metal plate (10) with a screw bore (16) as claimed in Claim 1, characterized in that
a) the metal plate (10) is provided with recesses (11) from one side of the plate in the region of the envisaged screw bore such that metal portions (13) remain between the recesses (11), and
b) the remaining metal portions (13) are alternately stamped in the direction of the one (10a) and of the other (10b) metal plate surface such that their outer surfaces (14a, 15a) lie flush with the relevant metal plate surfaces (10a, 10b).

3. A method as claimed in Claim 2, characterized in that the recesses are provided in the form of through holes (11) lying in one straight line (12), between which holes bridges (13) remain as the metal portions.

4. A method as claimed in Claim 3, characterized in that the circular through holes (11) are so arranged that the centre of the first hole (11a) lies on the edge of the metal plate (10).

## Revendications

1. Tôle (10) avec un canal taraudé (16) partant d'un bord de la tôle et s'étendant parallèlement aux surfaces de la tôle (10a, b), caractérisée en ce que le canal taraudé (16) est formé de parties de la tôle (13) situées entre les évidements (11) qui sont estampées en alternance dans la direction de l'une ou l'autre des surfaces de la tôle (10a, b) et dont les surfaces externes (14a, 15a) affleurent la surface respective de la tôle (10a, 10b).

2. Procédé de fabrication d'une tôle (10) avec un canal taraudé (16) selon la revendication 1, caractérisé en ce
a) que la tôle (10) est pourvue d'évidements (11) à partir d'un bord dans la région du canal taraudé (16) prévu de telle sorte qu'il subsiste entre les évidements (11) des parties de tôle (13), et
b) que les parties de tôle (13) subsistant sont estampées en alternance dans la direction de l'une (10a) ou l'autre (10b) des surfaces de la tôle de telle sorte que leurs surfaces externes (14a, 15a) affleurent la surface respective de la tôle (10a, 10b).

3. Procédé selon la revendication 2, caractérisé en ce que les évidements sont pratiqués sous la forme d'alésages (11) alignés en une droite (12) et qu'il subsiste entre eux des nervures (13) en tant que parties de tôle.

4. Procédé selon la revendication 3, caractérisé en ce que les alésages (11) circulaires sont disposés de telle manière que le centre du premier alésage (11a) soit appliqué sur le bord de la tôle (10).
